# EUROPEAN PATENT APPLICATION

(11) **EP 2 413 616 A1**
(43) Date of publication of application: **01.02.2012**
(21) Application number: 10755782.9
(22) Date of filing: 15.02.2010
(51) Int. Cl.: H04W 4/02, H04M 3/42, H04W 8/08, H04W 64/00

(54) **COMMUNICATION TERMINAL, PROGRAM AND COMMUNICATION SYSTEM**

(30) Priority: 23.03.2009 JP 2009069360
(71) Applicant: Hitachi, Ltd., Chiyoda-ku Tokyo 100-8280 (JP)
(72) Inventor: MORI, Maki, Kawasaki-shi Kanagawa 215-0013 (JP); FUJISHIRO, Takahiro, Kawasaki-shi Kanagawa 215-0013 (JP); FUKUSHIMA, Shinichiro, Kawasaki-shi Kanagawa 212-8567 (JP)
(74) Representative: MERH-IP Matias Erny Reichl Hoffmann
(86) International application number: PCT/JP2010/052224
(87) International publication number: WO 2010/109981

(57) **Abstract**

When regulation information set in a communication terminal such as a portable terminal is changed, the changed content can be efficiently acquired and set in the communication terminal. A term of validity is set in the regulation information used for a portable terminal (110) to wirelessly communicate with an RFID tag (130). When the term of validity has elapsed, the portable terminal (110) acquires new regulation information from a management server (140).

## Description

### TECHNICAL FIELD

The present invention relates to a technique of performing wireless communication in accordance with regulation information.

### INCORPORATION BY REFERENCE

This application claims priority based on a Japanese Patent Application No. 2009-69360 filed on March 23, 2009, the entire contents of which are incorporated herein by reference.

### BACKGROUND ART

When a portable terminal is to receive a service in a different country or area under an international roaming agreement, there may be an issue of whether or not a particular function of the portable terminal is made available depending on the legal situation and the like of each country.

For example, Patent Literature 1 describes a technique involving, in a portable terminal, enabling a voice memo function upon request in a country where voice recording is not regulated by law, and automatically disabling the voice memo function in a country where voice recording is regulated by law.

### CITATION LIST

### PATENT LITERATURE

PATENT LITERATURE 1: Japanese Patent Application Laid-open No. 2004-357229

### SUMMARY OF INVENTION

### TECHNICAL PROBLEM

According to the technique described in Patent Literature 1, the voice memo function is enabled or disabled based on information on legal restrictions (regulations) that are already set in the portable terminal. However, the legal restrictions (regulations) include not only constraints based on physical phenomena but also rules that are artificially decided on, and are subject to change.

In this respect, according to the technique described in Patent Literature 1, even when the legal restrictions (regulations) that are already set in the portable terminal are eased, the portable terminal has to observe the already-set legal restrictions (regulations), which is inconvenient.

The present invention has been made in view of the above, and therefore has an object to, when regulation information set in a communication terminal such as the portable terminal is changed, acquire a changed content efficiently and set the changed content in the communication terminal.

### SOLUTION TO PROBLEM

A term of validity (valid term) is set in advance in regulation information set in a communication terminal so that new regulation information is acquired when the valid term has expired.

For example, according to the present invention, there is provided a communication terminal which performs wireless communication, including: a storage unit which stores regulation information identifying a regulation of the wireless communication and a valid term of the regulation; and a control unit which performs, when the valid term of the regulation information has expired at a time of performing the wireless communication, processing of acquiring a new regulation.

### ADVANTAGEOUS EFFECTS OF THE INVENTION

As described above, according to the present invention, when the regulation information set in the communication terminal such as the portable terminal is changed, the changed content can be efficiently acquired, and the changed content can be set in the communication terminal.

### BRIEF DESCRIPTION OF DRAWINGS

[FIG. 1] A diagram schematically illustrating a communication system.
[FIG. 2] A diagram schematically illustrating a portable terminal.

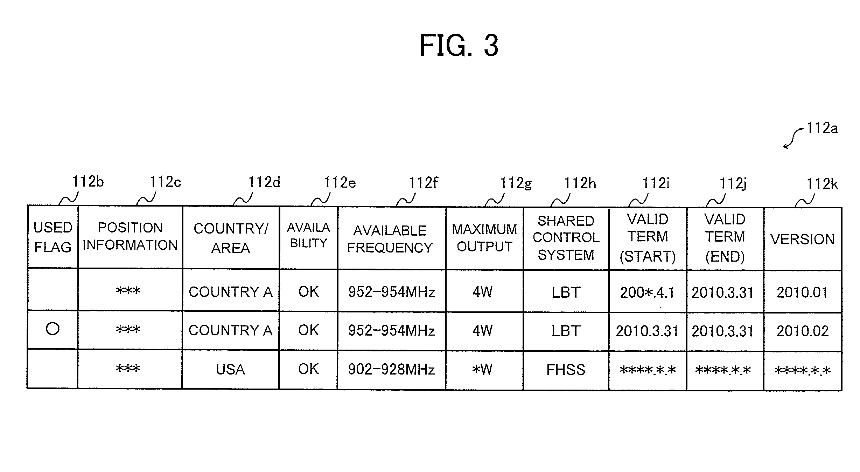

[FIG. 3] A diagram schematically illustrating UHF RFID R/W regulation information for portable terminal by country.
[FIG. 4] A diagram schematically illustrating a management server.
[FIG. 5] A diagram schematically illustrating UHF RFID R/W regulation information for regulation management server by country.

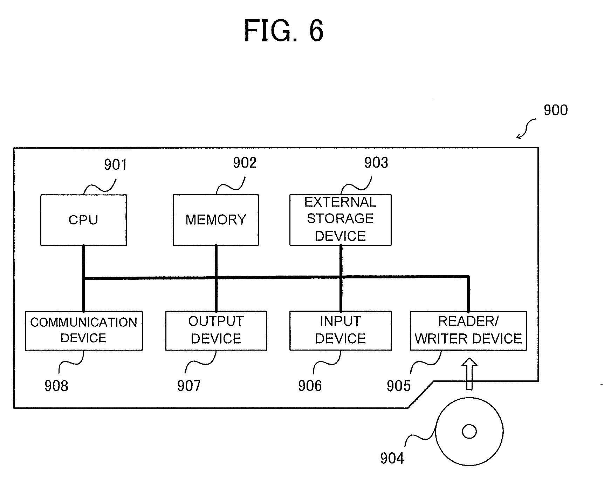

[FIG. 6] A diagram schematically illustrating a computer.
[FIG. 7] A flow chart for performing processing through an RFID R/W unit.
[FIG. 8] A flow chart illustrating processing of acquiring regulation information.
[FIG. 9] A flow chart illustrating processing of setting set values.

### DETAILED DESCRIPTION OF THE EMBODIMENTS

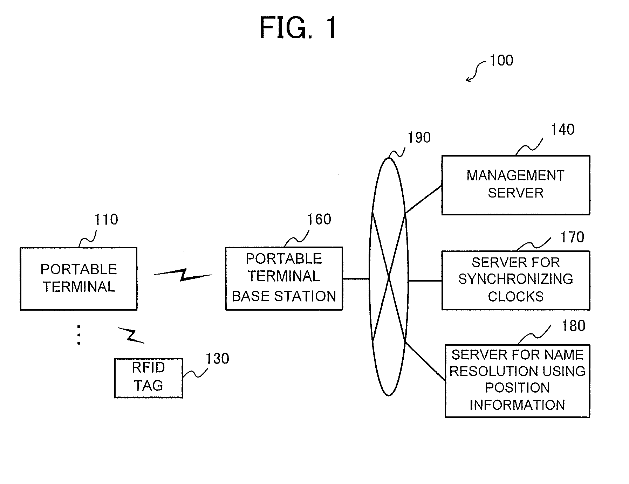

FIG. 1 is a schematic diagram of a communication system 100 according to an embodiment of the present invention. As illustrated, the communication system 100 includes a portable terminal 110, and a management server 130. The portable terminal 110 is configured to be able to be coupled to a network 190 via a portable terminal base station 160, and to be able to transmit/receive information to/from the management server 140 via the network 190. In addition, the portable terminal 110 is configured to be able to transmit/receive information to/from a radio frequency identification (RFID) tag 130 via wireless communication. Further, a server for synchronizing the clocks (such as network time protocol server; hereinafter, referred to as NTP server) 170 and a server for name resolution using position information 180 are coupled to the network 190.

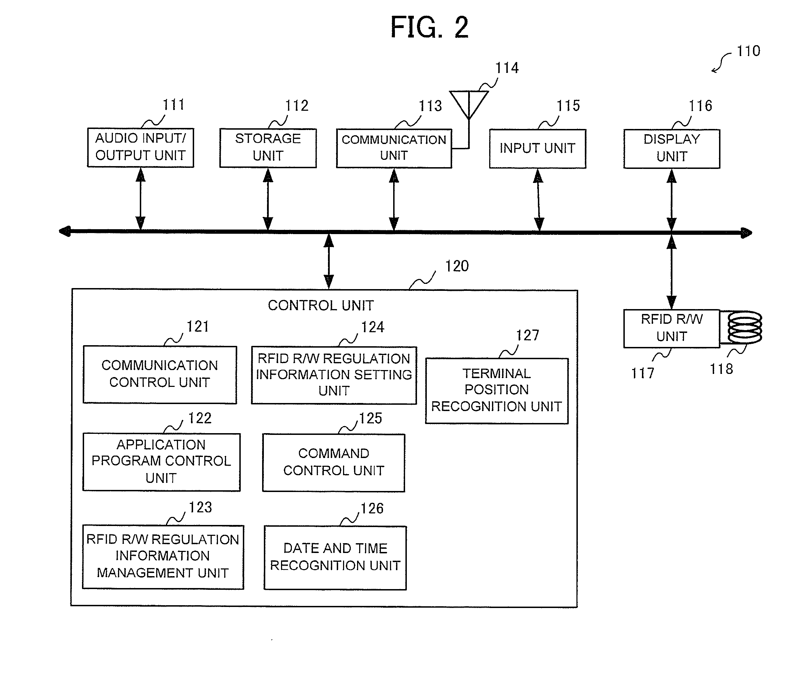

FIG. 2 is a schematic diagram illustrating the portable terminal 110. As illustrated in the figure, the portable terminal 110 includes an audio input/output unit 111, a storage unit 112, a communication unit 113, a portable terminal antenna 114, an input unit 115, a display unit 116, an RFID R/W unit 117, an RFID R/W/antenna 118, and a control unit 120.

The audio input/output unit 111 inputs and outputs audio data through a microphone (not shown) or a loudspeaker (not shown).

The storage unit 112 stores information necessary for processing performed in the portable terminal 110. For example, in this embodiment, the storage unit 112 stores position information of the portable terminal 110 recognized by a terminal position recognition unit 126 to be described later or the like.

In addition, in this embodiment, the storage unit 112 stores information identifying communication rules (regulations) on RFID. For example, the storage unit 112 stores UHF RFID R/W regulation information for portable terminal by country 112a as illustrated inFIG. 3 (schematic diagram of the UHF RFID R/W regulation information for portable terminal by country 112a).

As illustrated in the figure, the UHF RFID R/W regulation information for portable terminal by country 112a includes a used flag column 112b, a position information column 112c, a country/area column 112d, an availability column 112e, an available frequency column 112f, a maximum output column 112g, a shared control system column 112h, a valid term (start) column 112i, a valid term (end) column 112j, and a version column 112k.

The used flag column 112b stores information identifying the regulations under which the portable terminal 110 is operating. In this embodiment, the portable terminal 110 is operating under the regulations indicated by the used flag column 112b storing the mark "○", but the present invention is not limited to such mode.

The position information column 112c stores information identifying position information of the portable terminal 110 at the time when the regulations identified by each record in the UHF RFID R/W regulation information for portable terminal by country 112a are acquired.

The country/area column 112d stores information identifying the country or area in which the regulations identified by each record in the UHF RFID R/W regulation information for portable terminal by country 112a are applied.

The availability column 112e stores information identifying whether or not the RFID R/W units 117 and 118 are available under the regulations identified by each record in the UHF RFID R/W regulation information for portable terminal by country 112a. For example, in this embodiment, it is indicated that the RFID R/W units 117 and 118 are available when the availability column 112e stores the character string "OK", and that the RFID R/W units 117 and 118 are unavailable when the availability column 112e stores the character string "NA", but the present invention is not limited to such mode.

The available frequency column 112f stores information identifying a frequency band that is available under the regulations identified by each record in the UHF RFID R/W regulation information for portable terminal by country 112a.

The maximum output column 112g stores information identifying the value of a maximum output of a transmission power available under the regulations identified by each record in the UHF RFID R/W regulation information for portable terminal by country 112a.

The shared control system column 112h stores information identifying a shared control system for avoiding radio wave interference under the regulations identified by each record in the UHF RFID R/W regulation information for portable terminal by country 112a.

The valid term (start) column 112i stores information identifying the start date (year-month-day) of a term of validity (valid term) of the regulations identified by each record in the UHF RFID R/W regulation information for portable terminal by country 112a.

Thevalidterm (end) column 112j storesinformationidentifying the end date (year-month-day) of the valid term of the regulations identified by each record in the UHF RFID R/W regulation information for portable terminal by country 112a.

The version column 112k stores information identifying the version of the regulations identified by each record in the UHF RFID R/W regulation information for portable terminal by country 112a..

Returning to FIG. 2, the communication unit 114 performs wireless communication through the portable terminal antenna 115. Note that, the communication unit 114 also performs processing such as modulation/demodulation of the data to be transmitted/received and frequency conversion.

In addition, in this embodiment, the communication unit 114 is configured to be able to perform audio communication and data communication simultaneously by using a multiplexing technology such as time sharing or code division multiple access.

The input unit 115 receives an input of information.

The display unit 116 outputs information.

The RFID R/W unit 117 transmits/receives information to/from the RFID tag 130 through the RFID R/E/antenna 118.

The control unit 120 includes a communication control unit 121, an application program control unit 122, an RFID R/W regulation information management unit 123, an RFID R/W regulation information setting unit 124, a command control unit 125, a date and time recognition unit 126, and a terminal position recognition unit 127.

The communication control unit 121 controls communication processing performed in the portable terminal 110.

The application program control unit 122 controls an application program executed in the portable terminal 110.

In addition, when the application program control unit 122 receives an instruction to execute an application program using the RFID R/W unit 117 or an instruction to transmit a command using the RFID R/W unit 117, the application program control unit 122 instructs the RFID R/W regulation information management unit 123 to acquire regulation information.

The RFID R/W regulation information management unit 123 controls processing of acquiring the regulation information from the management server 140 to be described later and storing the acquired regulation information in the storage unit 112, processing of updating the regulation information stored in the storage unit 112, and the like.

For example, the RFID R/W regulation information management unit 123 performs, in response to the instruction from the application program control unit 122, the processing of acquiring the regulation information, and instructs the RFID R/W regulation information setting unit 124 to set the acquired regulation information in the RFID R/W unit 117.

In addition, if the valid term is not set in the regulation information acquired from the management server 140 to be described later, when the RFID R/W regulation information management unit 123 stores the regulation information in the UHF RFID R/W regulation information for portable terminal by country 112a, the RFID R/W regulation information management unit 123 stores information identifying the date on which the regulation information is acquired in the valid term (start) column 112i, and stores information identifying the date next to the date on which the regulation information is acquired in the valid term (end) column 112j.

Further, if regulation information for which the country or area, the valid term, and the version are identified, and for which set information such as the available frequency, the maximum output, and the shared control system is not identified is acquired from the management server 140 to be described later, the RFID R/W regulation information management unit 123 stores information identifying the acquired valid term in the valid term (start) column 112i and the valid term (end) column 112j of the record having the country/area column 112d and the version column 112k that store the country or area and the version identified by the regulation information.

The RFID R/W regulation information setting unit 124 controls processing of setting the settings identified by the regulation information in the RFID R/W unit 117 in response to the instruction from the RFID R/W regulation information management unit 123.

The command control unit 125 controls processing of generating an instruction command to the RFID R/W unit 117 in response to instructions from the application program control unit 122 and the RFID R/W regulation information setting unit 124, and outputting the generated instruction command to the RFID R/W unit 117.

The date and time recognition unit 126 performs processing of receiving a signal for synchronizing the clocks from the NTP server 170 or a global positioning system (GPS) satellite (not shown) through the portable terminal antenna 114 and the communication unit 113, correcting time information, and calculating the current time.

The terminal position recognitionunit 127 performs processing of acquiring the position information for identifying the position of the portable terminal 110 from the GPS satellite or the portable terminal base station 160 through the antenna 114 and the communication unit 113, and storing the acquired position information in the storage unit 112.

Returning to FIG. 1, the RFID tag 130 is an IC chip for transmitting/receiving information through wireless communication, which may be a known RFID tag of any type, such as a passive type or an active type, and a detailed description thereof is omitted.

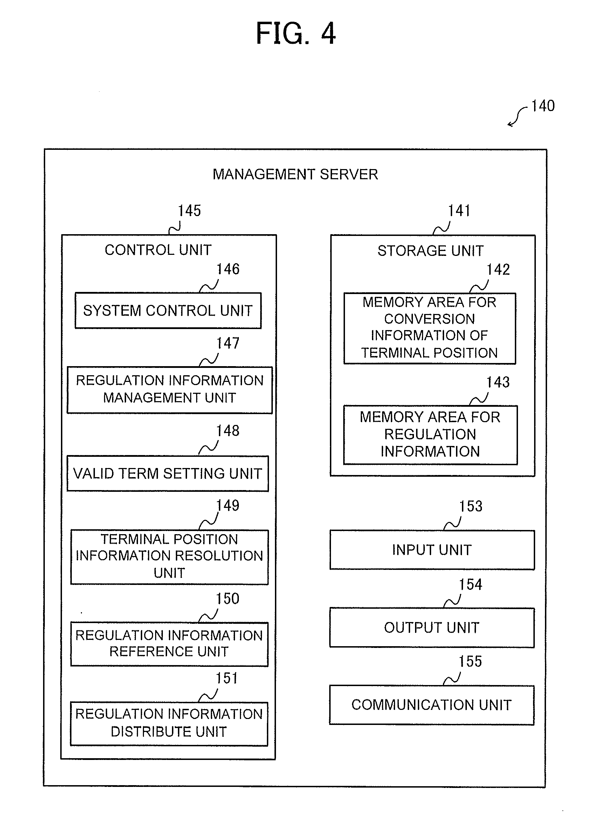

FIG. 4 is a schematic diagram of the management server 140. As illustrated in the figure, the management server 140 includes a storage unit 141, a control unit 145, an input unit 153, an output unit 154, and a communication unit 155.

The storage unit 141 includes a memory area for conversion information of terminal position 142 and a memory area for regulation information 143.

The memory area for conversion information of terminal position 142 stores conversion information of terminal position for converting the position information supplied from the portable terminal 110 to information identifying the country or area to which the position information belongs.

For example, when the position information supplied from the portable terminal 110 is information identifying a latitude and longitude, the memory area for conversion information of terminal position 142 stores the information identifying the latitude and longitude as well as the information identifying the country or area as the conversion information of terminal position, and when the position information supplied from the portable terminal 110 is information containing a code identifying the country or area, the memory area for conversion information of terminal position 142 stores information identifying the code and the country or area as the conversion information of terminal position.

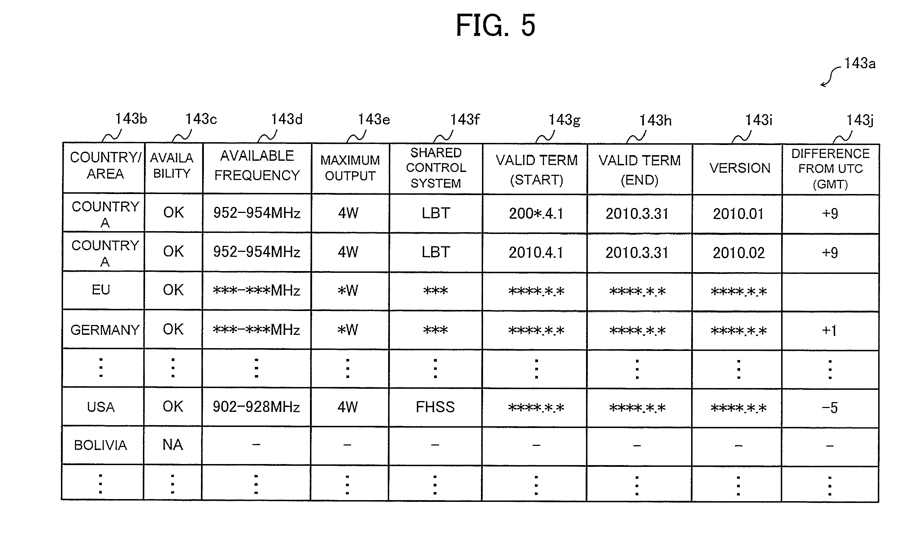

The memory area for regulation information 143 stores information identifying the communication rules (regulations) on RFID. For example, the memory area for regulation information 143 stores UHF RFID R/W regulation information for regulation management server by country 143a as illustrated in FIG. 5 (schematic diagram of the UHF RFID R/W regulation information for regulation management server by country 143a).

As illustrated in the figure, the UHF RFID R/W regulation information for regulation management server by country 143a includes a country/area column 143b, an availability column 143c, an available frequency column 143d, a maximum output column 143e, a shared control system column 143f, a valid term (start) column 143g, a valid term (end) column 143h, a version column 143i, and a difference from UTC (GMT) column 143j.

The country/area column 143b stores information identifying the country or area in which the regulations identified by each record in the UHF RFID R/W regulation information for regulation management server by country 143a are applied.

The availability column 143c stores information identifying whether or not the RFID R/W units 117 and 118 are available under the regulations identified by each record in the
RFID R/W regulation information for regulation management server by country 143a. For example, in this embodiment, it is indicated that the RFID R/W units 117 and 118 are available when the availability column 143c stores the character string "OK", and that the RFID R/W units 117 and 118 are unavailable when the availability column 143c stores the character string "NA", but the present invention is not limited to such mode.

The available frequency column 143d stores information identifying a frequency band that is available under the regulations identified by each record in the UHF RFID R/W regulation information for regulation management server by country 143a.

The maximum output column 143e stores information identifying the value of a maximum output of a transmission power available under the regulations identified by each record in the UHF RFID R/W regulation information for regulation management server by country 143a.

The shared control system column 143f stores information identifying a shared control system for avoiding radio wave interference under the regulations identified by each record in the UHF RFID R/W regulation information for regulation management server by country 143a.

The valid term (start) column 143g stores information identifying the start date (year-month-day) of the valid term of the regulations identified by each record in the UHF RFID R/W regulation information for regulation management server by country 143a. Note that, when the valid term of the regulations is not defined, the valid term (start) column 143g is configured to be able to identify that the valid term is not defined (for example, to leave the column blank or store a specific symbol or character string).

Thevalidterm (end) column 143h stores information identifying the end date (year-month-day) of the valid term of the regulations identified by each record in the UHF RFID R/W regulation information for regulation management server by country 143a. Note that, when the valid term of the regulations is not defined, the valid term (end) column 143h is configured to be able to identify that the valid term is not defined (for example, to leave the column blank or store a specific symbol or character string).

The version column 143i stores information identifying the version of the regulations identified by each record in the UHF RFID R/W regulation information for regulation management server by country 143a.

The difference from UTC (or Greenwich Mean Time (GMT)) column 143j stores information identifying a time difference between the time in the country or area identified by the country/area column 143b and the Coordinated Universal Time (UTC).

Returning to FIG. 4, the control unit 145 includes a system control unit 146, a regulation information management unit 147, a valid term setting unit 148, a terminal position information resolution unit 149, a regulation information reference unit 150, and a regulation information distribute unit 151.

The system control unit 146 controls the entire processing performed in the management server 140.

The regulation information management unit 147 controls processing of receiving an input of the regulation information through the input unit 153, and storing the received input in the UHF RFID R/W regulation information for regulation management server by country 143a. In addition, the regulation information management unit 147 performs processing of updating the regulation information stored in the UHF RFID R/W regulation information for regulation management server by country 143a.

The valid term setting unit 148 performs processing of receiving an input of information identifying a valid term (start date and end date) of the regulation information identified by each record in the UHF RFID R/W regulation information for regulation management server by country 143a through the input unit 153, and storing the received input in the valid term (start) column 143g and the valid term (end) column 143h of the corresponding record.

Note that, when the regulation information does not define the valid term, the valid term setting unit 148 allows the record in the UHF RFID R/W regulation information for regulation management server by country 143a corresponding to the regulation information to be identifiable by the valid term (start) column 143g and the valid term (end) column 143h that do not have the defined valid term.

The terminal position information resolutionunit 149 performs processing of converting the position information supplied from the portable terminal 110 to information identifying the country or area to which the position information belongs by using the conversion information of terminal position stored in the memory area for conversion information of terminal position 142.

The regulation information reference unit 150 performs processing of identifying the regulation information corresponding to the country or area, which is obtained by the conversion of the position information supplied from the portable terminal 110, from the UHF RFID R/W regulation information for regulation management server by country 143a.

The regulation information distribute unit 151 controls processing of distributing the regulation information corresponding to the country or area, which is obtained by the conversion of the position information supplied from the portable terminal 110, to the portable terminal 110.

For example, in the regulation information corresponding to the country or area, which is obtained by the conversion of the position information supplied from the portable terminal 110, when the version supplied from the portable terminal 110 is older than the latest version stored in the version column 143i of the UHF RFID R/W regulation information for regulation management server by country 143a, the regulation information distribute unit 151 distributes the information stored in the country/area column 143b, the availability column 143c, the available frequency column 143d, the maximum output column 143e, the shared control system column 143f, the valid term (start) column 143g, the valid term (end) column 143h, and the version column 143i of the record having the version column 143i that stores the latest version as the regulation information to the portable terminal 110.

On the other hand, in the regulation information corresponding to the country or area, which is obtained by the conversion of the position information supplied from the portable terminal 110, when the version supplied from the portable terminal 110 is identical with the latest version stored in the version column 143i of the UHF RFID R/W regulation information for regulation management server by country 143a, the regulation information distribute unit 151 distributes the information stored in the country/area column 143b, the valid term (start) column 143g, the valid term (end) column 143h, and the version column 143i of the record having the version column 143i that stores the latest version as the regulation information to the portable terminal 110.

The input unit 153 receives an input of information.

The output unit 154 outputs information.

The communication unit 155 transmits/receives information via the network 190.

The management server 140 described above may be realized by, for example, a general computer 900 as illustrated inFIG. 6 (schematic diagram of the computer 900), which includes a central processing unit (CPU) 901, a memory 902, an external storage device 903 such as a hard disk drive (HDD), a reader/writer device 905 which reads/writes information from/to a recording medium 904 having portability, such as a compact disk (CD) or a digital versatile disk (DVD), an input device 906 such as a keyboard or a mouse, an output device 907 such as a display, and a communication device 908 such as a network interface card (NIC) for coupling to a communication network.

For example, the storage unit 141 may be realized by using the memory 902 or the external storage device 903 by the CPU 901, the control unit 145 may be realized by loading a predetermined program stored in the external storage device 903 to the memory 902 and executing the predetermined program by the CPU 901, the input unit 153 may be realized by using the input device 906 by the CPU 901, the output unit 154 may be realized by using the output device 907 by the CPU 901, and the communication unit 155 may be realized by using the communication device 908 by the CPU 901.

The predetermined program is downloaded from the recording medium 904 through the reader/writer device 905 or from the network through the communication device 908 to the external storage device 903, and then loaded onto the memory 902 and executed by the CPU 901. In addition, the predetermined program may be loaded directly onto the memory 902 from the recording medium 904 through the reader/writer device 905, or from the network through the communication device 908, and then executed by the CPU 901.

Returning to FIG. 1, the portable terminal base station 160 performs processing of coupling the portable terminal 110 to the network 190.

The NTP server 170 transmits a signal identifying the clock for synchronization (for example, UTC) in the communication system 100 in response to a request from another device (for example, the portable terminal 110).

The server for name resolution using position information 180 performs processing of converting, in response to a request from another device (forexample, the management server 140), the position information supplied from the another device to information identifying the country or area to which the position information belongs, and returning the information identifying the country or area obtained by the conversion to the another device.

For example, the server for name resolution using position information 180 stores in advance information similar to the conversion information of terminal position stored in the memory area for conversion information of terminal position 142 of the management server 140, and uses the conversion information of terminal position to perform the conversion from the position information to the country or the like.

Note that, in this embodiment, the management server 140 may perform the conversion of the position information supplied from the portable terminal 110 within the management server 140 itself, or may transmit the position information supplied from the portable terminal 110 to the server for name resolution using position information 180 and acquire the information identifying the country or the like in response thereto.

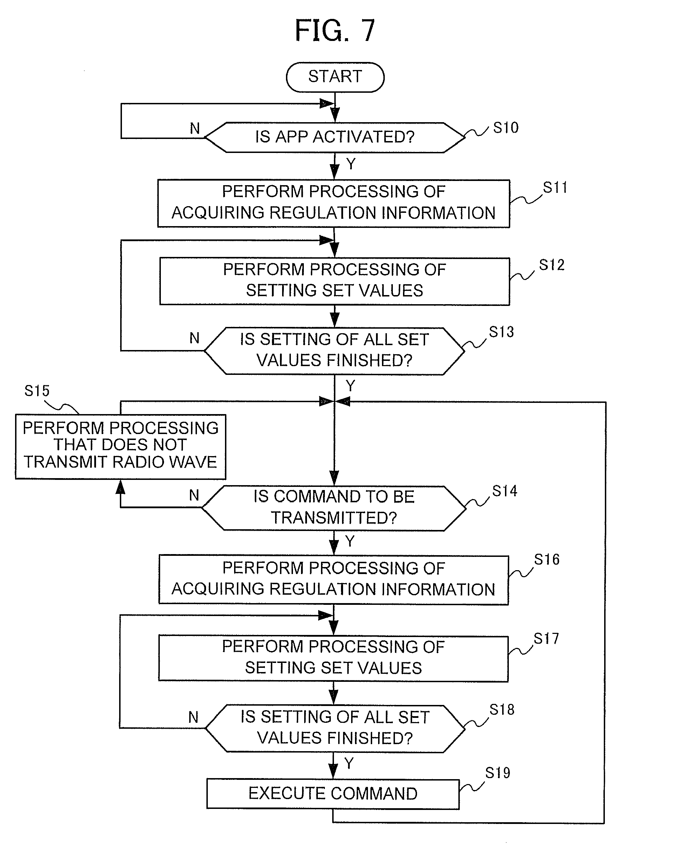

FIG. 7 is a flow chart for performing processing in the portable terminal 110 through the RFID R/W unit 117.

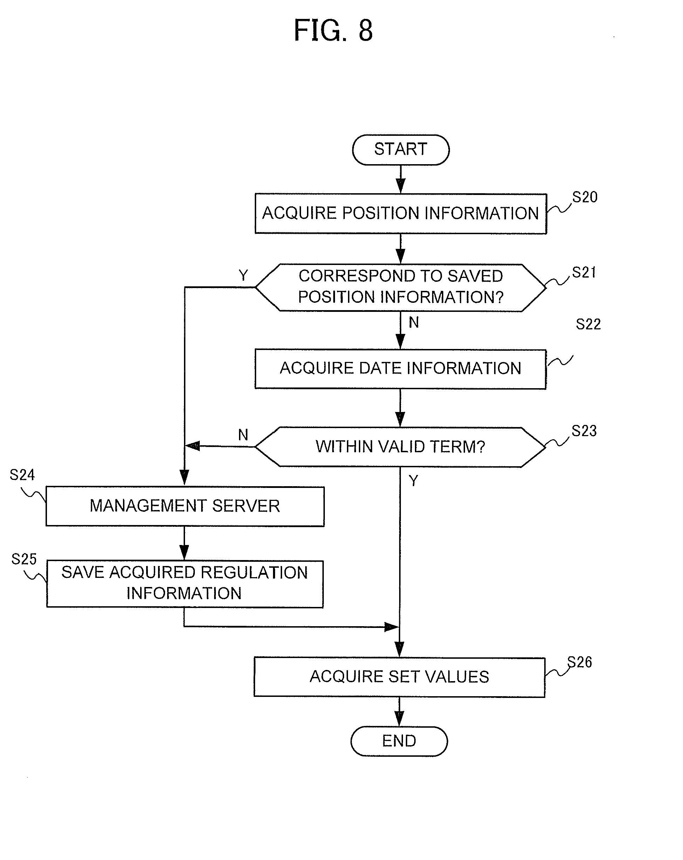

First, when the application program control unit 122 of the portable terminal 110 activates an application program using the RFID R/W unit 117 in response to an instruction input through the input unit 115 (S10; Yes), the RFID R/W regulation information management unit 123 performs processing of acquiring the regulation information (S11). Note that, the processing of acquiring the regulation information is described in detail with reference to FIG. 8.

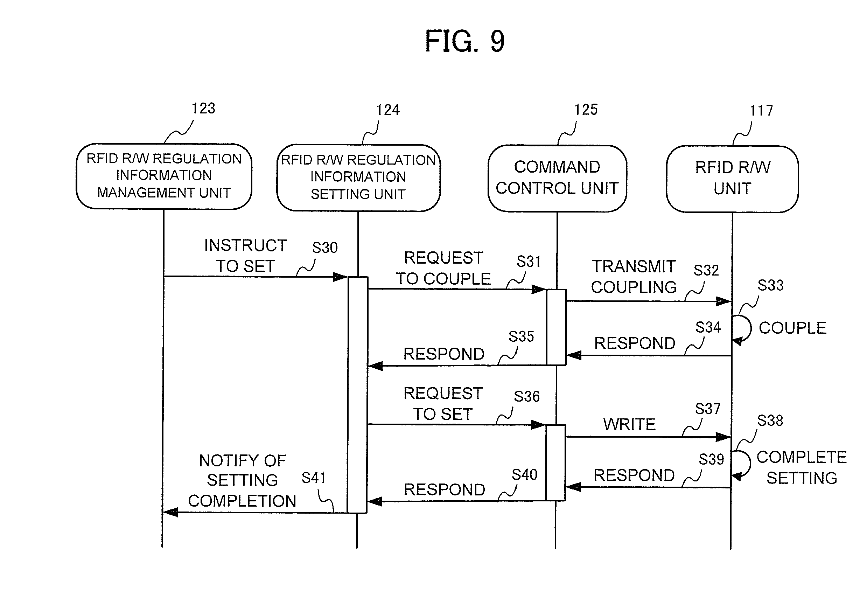

Next, the RFID R/W regulation information management unit 123 issues to the RFID R/W regulation information setting unit 124 an instruction to set the set values contained in the regulation information acquired in Step S11 to the RFID R/W unit 117, and the RFID R/W regulation information setting unit 124 sets the necessary set values to the RFID R/W unit 117 through the command control unit 125 (S12). Note that, the processing of setting the set values in Step S12 is described in detail with reference to FIG. 9. In addition, Step S12 does not need to be necessarily executed.

The set values to be set in this embodiment include, for example, whether or not the RFID R/W unit 117 is used, the used frequency, the maximum output, the shared control system, and the like.

Then, the RFID R/W regulation information setting unit 124 repeats the processing of Step S12 until the setting of all the set values is finished, and, when the setting of all the set values is finished (Step S13; Yes), the processing proceeds to Step S14.

In Step S14, the application program control unit 122 checks whether or not the processing to be performed in response to the execution instruction for which the input is received from a user of the portable terminal 110 through the input unit 115 is processing of transmitting a radio wave from the RFID R/W unit 117 (S14). When the processing is processing that does not transmit a radio wave (Step S14; No), the processing proceeds to Step S15. When the processing is processing of transmitting a radio wave (Step S15; Yes), the processing proceeds to Step S16.

In Step S15, the application program control unit 122 executes the processing for which the execution instruction is input from the user of the portable terminal 110 through the input unit 115. Then, the processing returns to Step S14, in which an input of a new instruction is received.

In Step S16, the application program control unit 122 issues an instruction to the RFID R/W regulation information management unit 123, and the RFID R/W regulation information management unit 123 performs processing of acquiring the regulation information (S16). Note that, the processing of acquiring the regulation information is described in detail with reference to FIG. 8.

Next, the RFID R/W regulation information management unit 123 issues to the RFID R/W regulation information setting unit 124 an instruction to set the set values contained in the regulation information acquired in Step S16 to the RFID R/W unit 117, and the RFID R/W regulation information setting unit 124 sets the necessary set values to the RFID R/W unit 117 through the command control unit 125 (S17). Note that, the processing of setting the set values in Step S17 is described in detail with reference to FIG. 9.

The set values tobe set in this embodiment include, for example, whether or not the RFID R/W unit 117 is used, the used frequency, the maximum output, the shared control system, and the like.

Then, the RFID R/W regulation information setting unit 124 repeats the processing of Step S17 until the setting of all the set values is finished, and, when the setting of all the set values is finished (Step S18; Yes), the processing proceeds to Step S19.

In Step S19, the application program control unit 122 executes the processing for which the execution instruction is input from the user of the portable terminal 110 through the input unit 115, and the processing returns to Step S14, in which a new instruction is received.

Note that, in the flow of FIG. 7, if interrupt processing of ending the application program is generated from the user of the portable terminal 110, when the portable terminal 110 is coupled to the RFID tag 130 through the RFID R/W unit 117, the application program control unit 112 ends the applicationprogram after executing processing of decoupling from the RFID tag 130.

Note that, in this embodiment, the processing of Step S11 is executed after the application program is activated, but the processing may be executed when the portable terminal 110 is powered on.

FIG. 8 is a flow chart illustrating the processing of acquiring the regulation information.

First, the RFID R/W regulation information management unit 123 acquires the position information, which is acquired by the terminal position recognition unit 127 and stored in the storage unit 112 (S20).

Next, the RFID R/W regulation information management unit 123 checks whether or not the position information acquired in Step S21 corresponds to the position information acquired at the time when the currently-used regulation information is acquired (S21). When the pieces of position information correspond to each other (Step S21; Yes) the processing proceeds to Step S24, and when the pieces of position information do not correspond to each other (Step S21; No), the processing proceeds to Step S22.

For example, the RFID R/W regulation information management unit 123 extracts the position information from the position information column 112c of the record having the used flag column 112b of the UHF RFID R/W regulation information for portable terminal by country 112a that stores the symbol "○", and compares the extracted position information and the position information acquired in Step S20.

For example, if the position information is a latitude and longitude, when the latitude and longitude acquired in Step S20 are within a predetermined range with respect to the latitude and longitude extracted from the UHF RFID R/W regulation information for portable terminal by country 112a, it is judged that the pieces of position information correspond to each other.

In addition, if the position information is a code indicating the position acquired from the portable terminal base station 160, when the code acquired in Step S20 coincides with the code extracted from the UHF RFID R/W regulation information for portable terminal by country 112a, it is judged that the pieces of position information correspond to each other.

In Step S22, the RFID R/W regulation information management unit 123 acquires the current date (year-month-day), which is calculated by the date and time recognition unit 126, from the date and time recognition unit 126, and judges whether or not the currently used regulation information is within the valid term. When the currently used regulation information is within the valid term (Step S22; Yes), the processing proceeds to Step S26, and when the currently used regulation information is not within the valid term (Step S22; No), the processing proceeds to Step S24.

For example, the RFID R/W regulation information management unit 123 identifies the valid term by extracting the information stored in the valid term (start) column 112i and the valid term (end) column 112j of the record having the used flag column 112b of the UHF RFID R/W regulation information for portable terminal by country 112a that stores the symbol "○", and judges whether or not the date acquired from the date and time recognition unit 126 is included in the identified valid term.

In Step S24, the RFID R/W regulation information management unit 123 transmits a request to acquire the regulation information, from which the position information acquired in Step S20 and the version information of the currently used regulation information are identified, to the management server 140 through the communication unit 113 and the portable terminal antenna 114, and acquires the corresponding regulation information from the management server 140.

Then, the RFID R/W regulation information management unit 123 stores the regulation information acquired in Step S24 in the UHF RFID R/W regulation information for portable terminal by country 112a (S25).

For example, the RFID R/W regulation information management unit 123 adds a new record to the UHF RFID R/W regulation information for portable terminal by country 112a, and stores the regulation information acquired in Step S25 in the corresponding column. At this time, when the valid term is not set in the regulation information acquired from the management server 140, the RFID R/W regulation information management unit 123 stores the information identifying the date on which the regulation information is acquired in the valid term (start) column 112i, and stores the information identifying the date next to the date on which the regulation information is acquired in the valid term (end) column 112j, to thereby move the symbol "○" to the used flag column 112b of the newly generated record.

Note that, if the regulation information for which set information such as the available frequency, the maximum output, and the shared control system is not identified is acquired from the management server 140, the RFID R/W regulation information management unit 123 stores the information identifying the acquired valid term in the valid term (start) column 112i and the valid term (end) column 112j of the record having the country/area column 112d and the version column 112k that store the country or area and the version identified by the regulation information.

Then, in Step S26, the RFID R/W regulation information management unit 123 acquires the predetermined set values from the currently used regulation information.

For example, the RFID R/W regulation information management unit 123 acquires, as the set values, information stored in the availability column 112e, the available frequency column 112f, the maximum output column 112g, and the shared control system column 112h of the record having the used flag column 112b of the UHF RFID R/W regulation information for portable terminal by country 112a that stores the symbol "○".

FIG. 9 is a flow chart illustrating the processing of setting the set values.

First, the RFID R/W regulation information management unit 123 instructs the RFID R/W regulation information setting unit 124 to set the set values acquired in Step S26 of FIG. 8 (S30).

Next, the RFID R/W regulation information setting unit 124 requests the command control unit 125 to couple to the RFID R/W unit 117 in order to set the set values acquired in Step S30 (S31)

Next, the command control unit 125 transmits a command to couple to the RFID R/W unit 117 (S32), to thereby couple to the RFID R/W unit 117 (S33).

When the RFID R/W regulation information setting unit 124 recognizes that the coupling is complete based on responses from the RFID R/W unit 117 and the command control unit 125 (S34 and S35), the RFID R/W regulation information setting unit 124 instructs the command control unit 125 to set the set values acquired in Step S30 (S36).

Next, the command control unit 125 transmits a command to set the set values acquired in Step S36 to the RFID R/W unit 117 (S37).

Next, receiving such command, the RFID R/W unit 117 sets the set values identified by the command (S38).

Recognizing that the setting is complete based on setting completion responses (S39 and S40), the RFID R/W regulation information setting unit 124 transmits a setting completion notification to the RFID R/W regulation information management unit (S41).

As described above, according to this embodiment, even if the regulation information is changed, the regulation information defined by laws and rules may be efficiently acquired before transmitting a radio wave so as to transmit a radio wave under the laws and rules.

In the embodiment described above, the management server 140 and the portable terminal 110 use the information identifying the country or area and the version information to identify the respective pieces of regulation information. However, the present invention is not limited to such mode, and, for example, each record in the UHF RFID R/W regulation information for portable terminal by country 112a and the UHF RFID R/W regulation information for regulation management server by country 143a is assigned identification information that is unique to the identified regulations (for example, regulation ID) in advance so that update of the regulations, update of the valid term, and the like may be managed based on the identification information.

In addition, in this embodiment, the regulations on RFID are described as an example. However, the present invention is not limited to such mode and is also applicable to regulations on another device and processing.

Further, in this embodiment, the portable terminal 110 is exemplified as a terminal that reads data stored in the RFID tag 130. However, the present invention is not limited to such mode and is also applicable to another communication terminal irrespective of whether or not audio communication is performed.

In addition, in this embodiment, if the valid term is not defined in the regulation information, the portable terminal 110 sets the date on which the regulation information is acquired as the start date and the date next to the date on which the regulation information is acquired as the end date of the valid term of the regulation information. However, the present invention is not limited to such mode, and, for example, the end date maybe a date after a predetermined period (for example, two days, three days, or one week).

In addition, in this embodiment, a change of the regulation information is recognized by accessing from the portable terminal 110 to the management server 140, but the change of the regulation information and the change of the valid term may be notified through a notification method using communication means from the management server 140 to the portable terminal 110.

### Reference Signs List

- 100: communication system
- 110: portable terminal
- 111: audio input/output unit
- 112: storage unit
- 113: communication unit
- 114: portable terminal antenna
- 115: input unit
- 116: display unit
- 117: RFID R/W unit
- 118: RFID R/E/antenna
- 120: control unit
- 121: communication control unit
- 122: application program control unit
- 123: RFID R/W regulation information management unit
- 124: RFID R/W regulation information setting unit
- 125: command control unit
- 126: date and time recognition unit
- 127: terminal position recognition unit
- 130: RFID tag
- 140: management server
- 141: storage unit
- 142: memory area for conversion information of terminal position
- 143: memory area for regulation information
- 145: control unit
- 146: system control unit
- 147: regulation information management unit
- 148: valid term setting unit
- 149: terminal position information resolution unit
- 150: regulation information reference unit
- 151: regulation information distribute unit

## Claims

1. A communication terminal which performs wireless communication, comprising:
a storage unit which stores regulation information identifying a regulation of the wireless communication and a valid term of the regulation; and
a control unit which performs, when the valid term of the regulation information has expired at a time of performing the wireless communication, processing of acquiring a new regulation.

2. A communication terminal according to claim 1,
wherein the regulation information further comprises position information of the communication terminal itself at a time when the regulation is acquired, and
wherein the control unit performs, when the position information of the communication terminal itself at the time of performing the wireless communication does not correspond to the position information identified by the regulation information, the processing of acquiring a new regulation.

3. A communication terminal according to claim 1, wherein the control unit transmits the position information of the communication terminal itself at the time of performing the wireless communication to a management server coupled to the communication terminal through a network, to thereby acquire a regulation corresponding to the position information from the management server.

4. A communication terminal according to claim 3, wherein, when the valid term is not defined in the regulation acquired from the management server, the control unit sets a date onwhich the regulation is acquired from the management server as a start date of the valid term, and a date after a predetermined period from the start date as an end date of the valid term, and stores the regulation as the regulation information in the storage unit.

5. A communication terminal according to claim 1, wherein, in at least one of a case where an instruction to execute an application program for performing the wireless communication is given, and a case where an instruction to execute processing of performing the wireless communication is given in the application program, the control unit checks whether or not the valid term of the regulation information has elapsed.

6. A program which causes a computer to function as a communication terminal which performs wireless communication,
the program further causing the computer to function as:
storage means which stores regulation information identifying a regulation of the wireless communication and a valid term of the regulation; and
control means which performs, when the valid term of the regulation information has elapsed at a time of performing the wireless communication, processing of acquiring a new regulation.

7. A program according to claim 6,
wherein the regulation information further comprises position information of the communication terminal itself at a time when the regulation is acquired, and
wherein the program further causes the control means to perform, when the position information of the communication terminal itself at the time of performing the wireless communication does not correspond to the position information identified by the regulation information, the processing of acquiring a new regulation.

8. A program according to claim 6, further causing the control means to transmit the position information of the communication terminal itself at the time of performing the wireless communication to a management server coupled to the communication terminal through a network, to thereby acquire a regulation corresponding to the position information from the management server.

9. A program according to claim 8, further causing, when the valid term is not defined in the regulation acquired from the management server, the control means to set a date on which the regulation is acquired from the management server as a start date of the valid term, and a date after a predetermined period from the start date as an end date of the valid term, and store the regulation as the regulation information in the storage means.

10. A program according to claim 6, further causing, in at least one of a case where an instruction to execute an application program for performing the wireless communication is given, and a case where an instruction to execute processing of performing the wireless communication is given in the application program, the control means to check whether or not the valid term of the regulation information has elapsed.

11. A communication system comprising a communication terminal which performs wireless communication, and a management server coupled to the communication terminal via a network,
the communication terminal being a communication terminal which performs wireless communication and comprises:
a storage unit which stores regulation information identifying a regulation of the wireless communication and a valid term of the regulation; and
a control unit which performs, when the valid term of the regulation information has elapsed at a time of performing the wireless communication, processing of acquiring a new regulation from the management server.
